# EUROPÄISCHE PATENTSCHRIFT

(11) **EP 1 607 723 B1**
(45) Veröffentlichungstag und Bekanntmachung des Hinweises auf die Patenterteilung: **17.03.2010**
(21) Anmeldenummer: 04102764.0
(22) Anmeldetag: 16.06.2004
(51) Int. Cl.: G01D 9/00, G01D 5/48, G08C 17/02

(54) **Elektronische Baueinheit mit einem Messsensor und einer drahtlosen Schnittstelle**
Electronic component with a measuring sensor and a wireless interface
Composant électronique avec un senseur de mesure et une interface sans fil

(43) Veröffentlichungstag der Anmeldung: 21.12.2005
(73) Patentinhaber: Swisscom AG, 3050 Bern (CH)
(72) Erfinder: Ritter, Rudolf, 3052, Zollikofen (CH)
(74) Vertreter: P&TS Patents & Technology Surveys SA

(56) Entgegenhaltungen:
- WO-A-94/27117
- US-A1- 2002 047 781
- US-A1- 2002 154 029
- US-A1- 2004 000 713
- US-B1- 6 622 567

## Beschreibung

### Technisches Gebiet

Die vorliegende Erfindung betrifft Baueinheiten mit einem Messsensor und einer drahtlosen Schnittstelle, insbesondere RFID-Baueinheiten, die auch einen Sensor enthalten.

### Stand der Technik

RFID-Baueinheiten (Radio-Frequency Identification) sind an sich schon bekannt und umfassen einen kleinen Chip, der mit einer Antenne gekoppelt ist. Der Chip enthält einen Speicherbereich, in welchem Daten abgelegt sind, die von einem Lesegerät im Nahbereich (das heisst in einer Entfernung von bis zu in der Regel maximal 10 Metern) induktiv und/oder elektromagnetisch gelesen werden können. Es wird dabei unterschieden zwischen proprietären RFID-Systemen und standardisierten Tags, die mit einer weltweit einmaligen Nummer versehen sind. Als Beispiel von standardisierten Tags können die EPC (Electronic Product Code)-Tags erwähnt werden.

Im einfachsten Fall enthält eine solche Baueinheit nur eine Nummer, die gelesen wird, um das mit der Baueinheit versehene Produkt elektronisch von nicht markierten (oder von mit einer anderen Nummer markierten Produkten) zu unterscheiden. EPC-Nummern sind beispielsweise 96 Bit lang und sollen somit eine grosse Anzahl von individuellen Produkten mit individuellen Nummern markieren können.

Es wurden auch komplexere RFID-Baueinheiten beschrieben, die mit einem Sensor versehen sind. WO2002/57097 offenbart einige Beispiele von RFID-Tags, die mit einem Drucksensor versehen sind und in einem Reifen montiert werden, damit ein RFID-Leser im Auto den Druck automatisch messen kann. Schwellwerte werden nicht erwähnt.

WO2003/44521 beschreibt ein RFID-Tag mit einem Sensor zur Ermittlung der Lebensmittelqualität durch Messung von Hydrogen-Sulfid.

GB2308947 beschreibt ein Tag mit einem Temperatur-Sensor.

WO2000/58752 beschreibt die Kombination eines RFID-Tags mit einem Sensor, insbesondere einen Sensor für elektrische Werte (Spannung, Strom, Widerstand usw.), der auch vom RFID-Leser gespeist wird.

WO-A-94/27117 betrifft ein Sicherheitssystem, in dem ein Sensor zur Aufnahme von Druck oder Temperatur mit einer RFID-Schnittstelle verbunden ist. Es ist insbesondere bekannt, die RFID-Schnittstelle erst zu aktivieren, wenn ein gewisser Schwellenwert überschritten wird.

US-A-2002/154029 betrifft ein System und ein Verfahren zur kontaktlosen Abfrage eines in eine Brücke eingebauten Sensors. Physikalische oder chemische Parameter werden vom Sensor aufgenommen und an das Abfragegerät weitergeleitet. In einer Ausführungsform ist ein Sensor zur Erfassung von einer Chlorideionenkonzentration in die Brücke eingelassen und arbeitet so autonom. Es ist dabei bekannt, einen vorgegebenen Referenzwert mit dem gemessenen Wert zu vergleichen.

US-B1-6,622,567 beschreibt ein ähnliches System mit einem Sensor, einer RFID-Schnittstelle und einem externen Lesegerät.

US-A1-2004/0000713 offenbart einen speziellen Sensor-Chip mit einer RFID-Schnittstelle, die ausgelesen werden kann. Es ist möglich, die Temperatur einer Weinflasche zu überwachen und durch Auslesen zu erfahren. Zusätzlich ist eine Datenbank mit dem Lesegerät verbunden, in der Informationen des Produkteherstellers abgelegt sind.

Die Offenlegungsschrift US-A1-2002/0047781 beschreibt ein elektronisches Label, welches mit einem externen Detektor (eine Zelle zur Detektierung von Strahlung) verbunden ist. Bei der Photonendetektierung wird ein Speicherbereich dauerhaft verändert.

Mit solchen Vorrichtungen und mit der vorliegenden Erfindung können somit Messwerte über den physikalischen und/oder chemischen Zustand eines Systems gewonnen und an ein Lesegerät übertragen werden. Befinden sich jedoch viele solcher Vorrichtungen auf engem Raum, müssen speziellen Massnahmen getroffen werden, um das Risiko einer Datenkollision zwischen dem Lesegerät und den (mehreren) Vorrichtungen zu verhindern. Solche Massnahmen verlangsamen jedoch das Lesen der Daten, da diese meistens nacheinander gelesen werden. Insbesondere bei Sensoren, die einen Alarmzustand so schnell wie möglich erkennen sollen, kann eine solche Verspätung gravierende Folgen haben. Der Dialog zwischen dem Leser und den gelesenen Vorrichtungen erfordert ausserdem bei stromsparenden RFID-Baueinheiten einen nicht vernachlässigbaren Stromverbrauch.

Auch die Auswertung der Daten im Lesegerät erfordert einen manchmal unzumutbaren Zeit- und Stromverbrauch Seitens des Lesegeräts.

### Zusammenfassung der Erfindung

Durch die vorliegende Erfindung soll eine Baueinheit, ein System und ein Verfahren angegeben werden, mit welchem diese Nachteile vermieden oder zumindest erheblich reduziert werden.

Diese Ziele werden unter anderem durch eine elektronische Baueinheit entsprechend dem unabhängigen Anspruch gelöst, welche **dadurch gekennzeichnet, dass** der benannte Messsensor eine Signalaufbereitungselektronik umfasst, um eine Ableitung und/oder eine Integration der elektrischen Zustandsgrösse vor dem Vergleich mit der benannten Referenz durchzuführen.

Dies hat den Vorteil, dass die Baueinheit anhand von den ermittelten Werten selbst ermittelt, ob und wann externe Lesegeräte auf Daten zugreifen dürfen. Es ist somit beispielsweise möglich zu verhindern, dass Daten (einschliesslich Messdaten, die von der Baueinheit selbst als nicht wertvoll erkannt werden) an externe Lesegeräte übermittelt werden.

Es kann somit auch verhindert werden, dass vertrauliche Daten gelesen werden, solange ein physikalisches oder chemisches Ereignis nicht stattgefunden hat.

### Kurze Beschreibung der Figuren

Die vorliegende Erfindung wird im Folgenden anhand der Figuren näher beschrieben. Es zeigen:
- Fig. 1: ein System mit einer RFID-Baueinheit, mehreren Lesegeräten und einer zentralen Infrastruktur und
- Fig. 2: schematisch einen Sensor gemäss der Erfindung.

### Wege zurAusführung der Erfindung

In dieser Beschreibung und in den Ansprüchen wird der Begriff Sensor verwendet für Messvorrichtungen, mit welchen zeitvariable Messwerte über den physikalischen und/oder chemischen Zustand eines Systems gewonnen werden können. Unter dem Begriff "zeitvariable Messwerte" sind Messwerte zu verstehen, welche im Verlauf der Zeit variieren oder variieren können. Ein Sensor ist somit ein Element, das eine zeitvariable (meistens nicht elektrische) physikalische oder chemische Zustandsgrösse in eine elektrische Zustandsgrösse umwandelt. Vorrichtungen, die nur die Zeit oder nur den absoluten Standort ermitteln, werden nicht als Sensor gekennzeichnet, obwohl gewisse Sensoren zusätzlich auch diese Parameter angeben. Elektronische Schaltungen, die ein oder mehrere analoge oder digitale Eingangssignale in ein oder mehrere Ausgangssignale umwandeln, sind auch keine Sensoren, obwohl bestimmte Sensoren einen Messwert liefern, der von einem Strom, von einer Spannung oder etwa von einem Widerstand in einem externen System abhängig ist.

Die zeitliche Folge von Messwerten, die von einem Sensor gewonnen werden, nennt man Signal.

Ein MEMS (micro electromechanical system) bezeichnet in diesem Text ein integriertes System mit elektrischen und mechanischen, optischen oder chemischen Komponenten, welches durch Fertigungsverfahren der Mikroelektronik hergestellt wird, und dessen Größe im Bereich von Mikrometern oder Millimetern liegt. MEMS-Sensoren sind Sensoren, die dieser Definition entsprechen und die sensorische und Daten verarbeitende Funktionen enthalten. In gewissen Ausführungen reichen genannte Sensoren bis in den Bereich der Nanotechnologie.

Ein RFID-Tag (Radio Frequency Identification) ist ein Bauteil (meistens ein Tag mit einem Speicherbereich) das kontaktlos auf Basis der Radiofrequenztechnologie Daten übermitteln kann. RFID's (manchmal auch Transponder genannt) bestehen aus einem Chip mit integriertem einfachen Prozessor, Antenne und dazugehörendem Speicher. Sie sind in unterschiedlichsten Formen erhältlich (beispielsweise als Etikett, Aufkleber, Plastikkarten, etc.) haben aber stets ein kleines Format; die gesamte Elektronik besteht meistens aus einem einzigen Chip (oft ein Chip mit einer Fläche kleiner als 10 Quadratmillimeter), oder aus einer reduzierten Anzahl von Chips, die meistens nicht auf einer Leiterplatte montiert sind. Der Durchmesser der Antenne ist meistens kleiner als 10 Zentimeter, vorzugsweise kleiner als 1 Zentimeter. Die Antenne enthält in der Regel keinen Ferritkern. Die Antenne ist meistens flach, als Spule gewickelt oder gedruckt und dient als Kommunikationsschnittstelle.

RFID's unterscheidet man in aktive und passive RFID's. Passive RFID's werden vom Lesegerät gespeist und gesteuert, während aktive RFID's über ihre eigene Energiequelle verfügen. RFID's sind aber vom Stromnetz unabhängig. Man unterscheidet ausserdem zwischen Master-RFID's (oder proaktive RFID's), die die Initiative einer Datenübertragung mit einem Lesegerät übernehmen können, und Sklaven-RFID's, die nur Abfragen von Lesegeräten beantworten können (beispielsweise Lese-, Schreibe-, Ausführungs- oder Änderungsabfragen).

Die für RFIDs vorgesehenen Frequenzebereiche umfassen für billige, langsame RFIDs mit einer kurzen Tragweite den Bereich zwischen 100 und 500 kHz, für potential billige RFIDs mit einer längeren Tragweite zwischen 10 und 15 MHz, und für teure, schnellere RFIDs, die auch eine längere Tragweite haben, zwischen 850 und 950MHz oder zwischen 2,4 und 5,8 GHz.

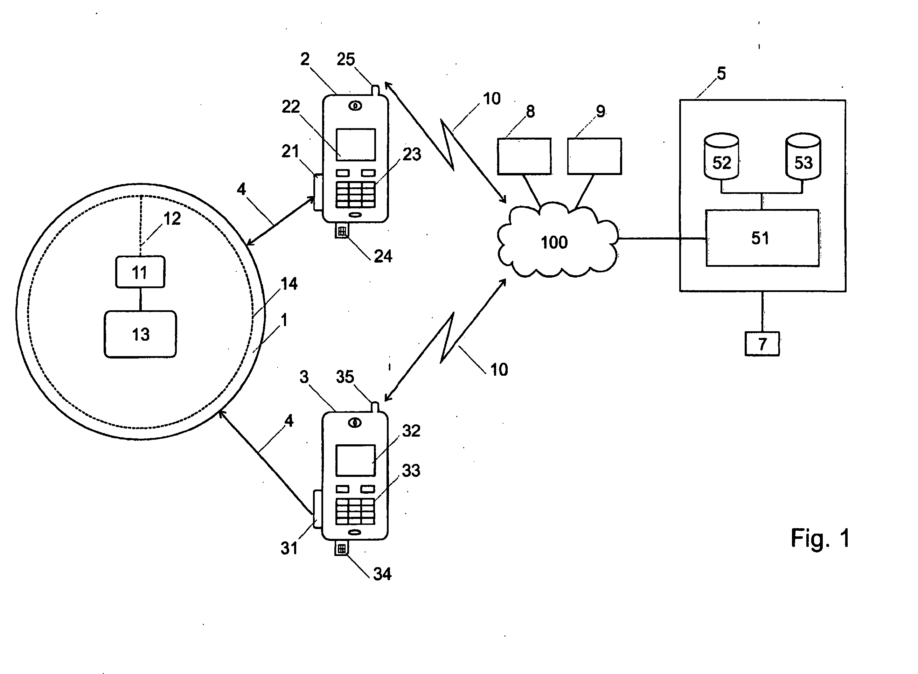

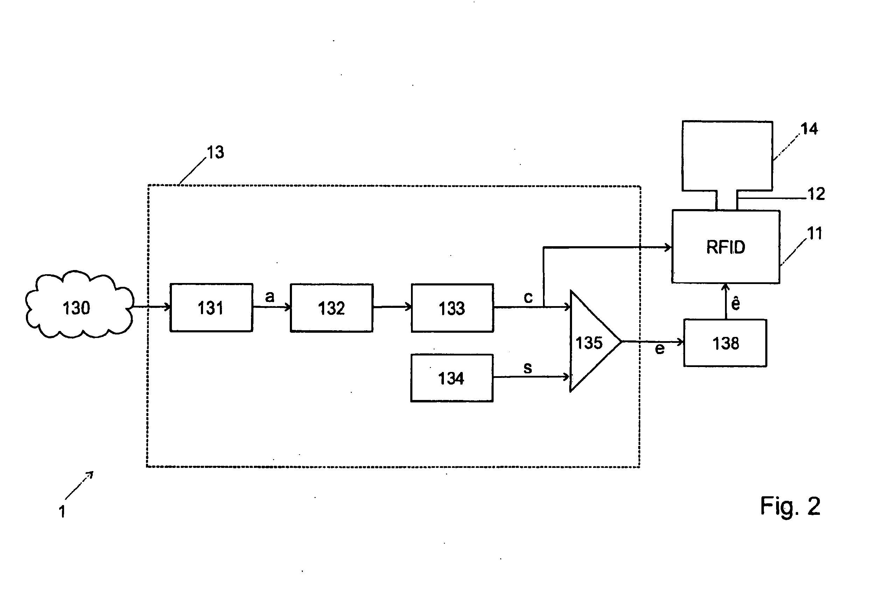

Die Figur 1 zeigt ein System mit einer Baueinheit 1, zwei Lesegeräten 2, 3 und einer zentralen Infrastruktur 5, die über ein Telekommunikationsnetz 100 mit den Lesegeräten 2, 3 Daten austauschen kann. Die Baueinheit 1 wird später im Zusammenhang mit der Figur 2 detaillierter beschrieben. Sie umfasst einen Sensor 13 (vorzugsweise einem MEMS-Sensor) der eine physikalische oder chemische Zustandsgrösse der Umwelt der Baueinheit in eine elektrische Zustandsgrösse umwandelt. Der Sensor kann beispielsweise einen oder mehreren der folgenden Parameter messen:
- Temperatur,
- Druck,
- Beschleunigung,
- Geschwindigkeit,
- Elektromagnetische Strahlung,
- Licht,
- UV-Licht,
- Akustische Grösse,
- Chemische Parameter,
- Atomare Strahlung,
- Biologische Parameter,
- Farbe,
- Gas,
- Duft,
- usw.

Der MEMS-Sensor besteht vorzugsweise aus einem einzigen Chip, der sowohl mechanische, optische, physikalische oder chemische Aufnehmer als auch die Elektronik zur Aufbereitung des Signals am Ausgang des Aufnehmers umfasst.

Die Baueinheit 1 umfasst ausserdem eine drahtlose Schnittstelle, in diesem Fall ein RFID-Tag 11, mit welchem Daten über eine drahtlose Schnittstelle 4 auf Basis der Radiofrequenztechnologie an das Lesegerät 2, 3 übermittelt werden können. Die Schnittstelle erlaubt vorzugsweise eine bidirektionale Datenübertragung. Das RFID-Tag 11 umfasst vorzugsweise einen Speicherbereich, in welchem temporäre und/oder permanente Daten bei der Personalisierung oder auch bei der Verwendung, abgelegt werden können. Permanente Daten umfassen beispielsweise eine eindeutige Identifikation des RFID's, beispielsweise eine EPC-Nummer oder eine Mobilteilnehmer-Identifizierung. Temporäre Daten können beispielsweise Messwerte sein und einen Flag umfassen, das angibt, ob die Schnittstelle gesperrt oder entsperrt ist; sie werden vorzugsweise in einem semitemporärem Speicher (beispielsweise ein EEPROM) abgelegt.

Die Baueinheit 1 kann über eine drahtlose Schnittstelle eine drahtlose Verbindung mit Lesegeräten 2, 3 aufbauen. Im dargestellten Beispiel werden ein autorisiertes Lesegerät 2 und ein nicht autorisiertes Lesegerät 3 dargestellt. Beide Lesegeräte bestehen in diesem Beispiel aus einem Mobilgerät mit einer Antenne 25 bzw. 35 und einer Funkschnittstelle 10 zum Anschluss an ein Mobilfunknetz 100 oder an ein anderes Ferntelekommunikationsnetz, einschliesslich Internet, usw. Die Mobilgeräte haben auch Eingabemittel 23, 33 und Wiedergabemittel, zum Beispiel eine Anzeige 22, 32 und einen Lautsprecher, um Daten aus der Baueinheit 1 und aus dem Mobilfunknetz wiederzugeben. Ein Identifizierungsmodul 24, 34 (beispielsweise in der Form einer Chipkarte) dient zur Identifizierung des Lesegeräts gegenüber dem Mobilfunknetz 100 und möglicherweise gegenüber dem RFID-Tag 11. Die Identifikation gegenüber dem RFID-Tag kann anhand der in der SIM-Karte abgelegten Mobilteilnehmer-Identifizierung (beispielsweise die IMSI oder die MSISDN) oder anhand anderen in der Chipkarte 24, 34 gespeicherten Identifizierungsdaten erfolgen. In einer Variante erfolgt die Identifikation des Lesegeräts 2, 3 mit Identifizierungsdaten im Mobilgerät, (beispielsweise mit einem Identifizierungscode oder mit einem privaten Schlüssel im Mobilgerät 2, 3).

Ein Lesegerät ohne direkten Anschluss an ein Ferntelekommunikationsnetz ist aber im Rahmen der Erfindung auch möglich. Denkbar ist beispielsweise ein Lesegerät ohne jede Anschlussmöglichkeit, oder ein Lesegerät mit einem Anschluss für ein lokales Telekommunikationsnetz (beispielsweise WLAN, Bluetooth, Ethernet, USB, usw.). Über dieses lokale Netz kann dann eine Verbindung mit Ferngeräten über ein Gateway aufgebaut werden (beispielsweise mit einem PC oder einem Mobiltelefon). Das Lesegerät 2, 3 kann auch aus einer Kombination in einer oder mehreren verbundenen Baueinheiten zwischen einem RFID-Leser 21, 31 und einem Mobilgerät bestehen.

Im dargestellten Beispiel kann nur das Lesegerät 2 auf die Daten in der Baueinheit 1 zugreifen; das Lesegerät 3 ist für diesen Zugriff gesperrt, weil es nicht über die benötigten Autorisierungsdaten (beispielsweise eine autorisierte Identität, biometrische Identität oder einen elektronischen Schlüssel) verfügt. Die vom Lesegerät 2 vorgezeigten Autorisierungsdaten können aus der Chipkarte 24, aus dem Mobilgerät 2 oder auch aus einem Fernserver 5 ermittelt werden.

Ebenfalls an das Telekommunikationsnetz 100 angeschlossen sind externe Benutzer 8 und externe Dienstanbieter 9, die über das Lesegerät auf die Daten in der Baueinheit 1 zugreifen können, oder denen diese Daten zugeschickt werden. Dies erlaubt beispielsweise, die Messdaten vom Sensor über das Lesegerät 2 und das Telekommunikationsnetz 100 an externe Telekommunikationsbenutzer 8, 9 zu senden, die diese Daten verwerten oder auf Basis dieser Daten Mehrwertdienste anbieten können. Externe Benutzer 8 und externe Dienstanbieter 9 können dem Lesegerät auch Autorisierungsdaten zur Verfügung stellen.

Ein zentraler Server 5 ist an das Telekommunikationsnetz 100 angeschlossen und kann somit mehrere Baueinheiten 1 und/oder mehrere Lesegeräte 2, 3 verwalten. Der Server 5 umfasst ein Modul für Anwendungen 51, eine Datenbank 52 für Dienste 52 und eine Benutzerdatenbank 53; ein Verrechnungssystem 7 kann ebenfalls an den Server 5 angeschlossen werden.

In einer Variante wird eine Anfrage eines Lesegeräts 2, 3 mit einem aus dem RFID-Tag gelesenen Code an einen nicht dargestellten Namen-Dienstserver geleitet, der mit einer entsprechenden elektronischen Adresse des Servers 5 antwortet. Die elektronische Adresse besteht beispielsweise aus einem URL oder einer anderen Adresse für ein TCP-IP Netz.

Der Benutzer des Lesegeräts 2, 3 kann somit alle Anfragen stets an den gleichen Namendienstserver senden, der die Adresse der Seite, anhand welcher die gewünschte Information oder Dienstleistung bereitgestellt wird, ermittelt. Die Verknüpfung im Namen-Dienstserver zwischen einem Code und einer Adresse kann vorzugsweise vom Anbieter der gewünschten Information jederzeit geändert werden (beispielsweise über ein dediziertes WEB-Formular). Dies erlaubt, die elektronische Adresse einer Seite oder eines Domains zu ändern, ohne die Endbenutzer informieren zu müssen.

Die Adresse der gewünschten Seite kann somit eindeutig allein anhand des im RFID-Tag 1 gespeicherten Codes gefunden werden; die Seite, auf welche zugegriffen wird, ist somit völlig unabhängig von der Adresse oder Telefonnummer des Servers 5.

Die Seite im Server 5, auf welche das Mobilgerät 2, 3 zugreift, umfasst möglicherweise einen Hypertext-Inhalt in einer Markup Sprache. In einer Variante umfasst diese Seite einen XML-Inhalt (eXtended Markup Language). In einer anderen Variante umfasst die Seite einen PML-Inhalt (Product Marking Language). Die Seite kann auch SOAP-Protokol (Simple Object Access Protocol), .NET- Framework oder andere Web-Dienste unterstützen.

Der Benutzer kann die gewünschte Information aus dem Server 5 beispielsweise mit einem normalen Browser in seinem Lesegerät 2, 3 wiedergeben. Der Inhalt, der wiedergegeben ist, kann beispielsweise von den übermittelten Messdaten des Sensors 13 und/oder von einem Benutzerprofil abhängig sein. Möglich ist auch, dass die manuell oder automatisch initiierte Übermittlung von Messdaten ein Ereignis, (beispielsweise einen Alarm) im Server 5 auslöst, wobei das Ereignis auch vom Wert der Messdaten abhängig ist. Ebenfalls möglich ist das Auslösen eines Ereignisses, wenn die empfangenen Messdaten in einem bestimmten Verhältnis zu früheren Messdaten desselben oder eines anderen Sensors stehen; auf diese Weise kann beispielsweise ein Alarm ausgelöst werden, wenn die von einem Sensor 13 ermittelten Messwerte von früheren Messwerten abweichen.

Der ausgelöste Alarm kann an das Lesegerät 2, 3 und/oder an andere Endgeräte als Text-, Daten- oder Sprachmeldung gesendet werden.

Der Server 5 kann ausserdem die Berechtigungen der Benutzer verwalten, um beispielsweise anzugeben, welche Benutzer von Lesegeräten 2, 3 auf welche Daten in welchem RFID's zugreifen dürfen. Die Verwendung der Dienste des Servers 5 kann dem Benutzer des Lesegeräts 2, 3 oder dem Benutzer des beanspruchten Dienstes vom Verrechnungszentrum 7 verrechnet werden.

Wir werden jetzt anhand der Figur 2 den Sensor 13 in der Baueinheit 1 näher beschreiben.

Der Sensor 13 umfasst einen Messwertaufnehmer 131, um eine physikalische oder chemische Zustandsgrösse, die von der Umwelt 130 der Baueinheit 1 beeinflusst wird, vorerst in eine elektrische Zustandsgrösse a umzuwandeln. Der Messwertaufnehmer 131 ist vorzugsweise ein MEMS und kann in einer Variante im selben Chip wie das RFID-Tag 11 realisiert werden. Vorzugsweise ebenfalls auf demselben Chip integriert, ist eine Signalaufbereitungsschaltung 132, die Signale am Ausgang des Aufnehmers 131 in eine geeignete Form umwandelt; die Aufbereitungsschaltung 132 kann beispielsweise unter anderem Interpolation und Extrapolationsmittel, Filtermittel, und analog-digital Konvertierungsmittel enthalten. Das Ausgangssignal der Aufbereitungsschaltung 132 kann ausserdem von einer Schaltung 133 integriert und/oder abgeleitet werden.

Ein Speicher 134 speichert einen Referenzwert s. Dieser Wert ist vorzugsweise während der Fabrikation oder Personalisierung der Baueinheit 1 definiert, kann aber in einer Variante (beispielsweise über die drahtlose Schnittstelle 4) nachträglich angepasst werden. Der Referenzwert s kann je nach gemessene Zustandsgrösse zum Beispiel eine Schwellwert sein.

Der Referenzwert s im Speicher 134 wird von einem Vergleichsmodul 135 mit dem Ausgang der Schaltung 133 verglichen. Wenn die elektrische Zustandsgrösse c am Ausgang des Messsensors 131-132-133 in einem bestimmten Verhältnis zum Referenzwert s steht (beispielsweise wenn die Zustandsgrösse c grösser ist als der Referenzwert s), wird ein binäres Entsperrsignal e am Ausgang des Vergleichsmoduls 135 erzeugt, das vorzugsweise in einem Latch 138 abgelegt wird. Das abgelegte Entsperrsignal ê wird an das RFID-Tag 11 auf demselben Chip oder in der selben Baueinheit 1 geleitet, und dient der Entsperrung dieses RFIDs.

Wegen dem kleinen Raumbedarf und dem niedrig zu haltenden Preis der Baueinheit 1 wird vorzugsweise das Vergleichsmodul 135 möglichst einfach gestaltet; in einer bevorzugten Variante besteht es aus einem einfachen analogen oder digitalen Komparator, oder aus einem Komparator mit Hysteresis, der die einwertige skalare Grösse c und s vergleicht, um ein binäres Signal e zu erzeugen. Es können aber auch komplexere Vergleiche gemacht werden, insbesondere wenn der Ausgang des Sensors 131-132-133 mehrwertig ist. Auch mit einem Softwaremodul durchgeführte Vergleiche sind möglich.

In einer Variante wird das RFID-Tag (die Schnittstelle) 11 völlig gesperrt, solange das Entsperrsignal e einen Wert Null hat, und erst dann entsperrt, wenn dieses Signal aktiv wird. In diesem Fall ist das RFID-Element völlig unsichtbar vom Lesegerät; das RFID-Element 11 beantwortet Leseanfragen von externen Lesegeräten 2, 3 nicht, solange die elektrische Zustandsgrösse e beispielsweise die vorbestimmte Schwelle s nicht überschritten hat. Dies hat den Vorteil, dass der Stromverbrauch von der Baueinheit und vom Lesegerät 2, 3 reduziert und die Vertraulichkeit gewahrt werden.

In einer Variante werden Leseanfragen wenn das Entsperrsignal e unaktiv ist von externen Lesegeräten 2, 3 zwar beantwortet, ohne dass die gewünschten Daten dem Lesegerät zugänglich gemacht werden. Dies hat den Vorteil, dass das Lesegerät die Anwesenheit einer Baueinheit 1 prüfen kann.

In noch einer anderen Variante werden Leseanfragen von externen Lesegeräten 2, 3 beantwortet; solange das Entsperrsignal e passiv ist, ist jedoch nur ein Teil der Daten im Chip zugänglich. Andere Daten können erst dann gelesen werden, nachdem das Entsperrsignal e in den aktiven Zustand gekommen ist.

Es können auch mehrere Schwellen vorgesehen werden, die jeweils den Zugriff auf andere Daten in der Baueinheit freischalten, sobald sie von den gemessenen Zustandsgrössen c überschritten werden.

Es kann auch ein erster Satz von Daten zugänglich gemacht werden, wenn oder solange das Entsperrsignal ê unaktiv ist, und ein zweiter unterschiedlicher Satz von Daten, wenn beziehungsweise nachdem das Entsperrsignal e aktiv wird.

Der Sensor kann entweder Messdaten kontinuierlich oder periodisch erfassen und selbst entscheiden, wann das RFID-Tag 11 entsperrt werden muss. Dies erfordert jedoch eine Stromquelle zur Stromversorgung des MEMs während diesen Messungen. In einer Variante werden Messungen nur bei Bedarf, beispielsweise erst nach dem Empfang einer Leseabfrage eines externen Lesegeräts 2, 3, durchgeführt. In diesem Fall werden die Leseabfragen erst dann beantwortet, wenn die Messergebnisse bestimmte Kriterien erfüllen. Diese Variante hat den Vorteil, dass auch der Sensor vom Lesegerät über die drahtlose Schnittstelle 4 versorgt werden kann, und dass er zwischen den Lesevorgängen im Einschlafmodus bleiben kann.

Die Daten, die in Abhängigkeit des Entsperrsignals e zugänglich gemacht werden, können die vom Sensor 13 ermittelte elektrische Zustandsgrössen c und/oder andere im RFID-Element 11 gespeicherte oder ermittelte Daten umfassen. Möglich ist beispielsweise auch die konditionale Freischaltung einer EPC-Nummer, einer Mobilteilnehmeridentifizierung oder andere benutzerspezifische Daten in Abhängigkeit des Ausgangs des Sensors 131-132-133.

In einer bevorzugten Variante ist der Zugriff auf Daten in der Baueinheit 1 unwiderrufbar entsperrt, sobald die elektrische Zustandsgrösse c die Schwelle s überschritten hat. Diese Variante eignet sich beispielsweise für RFID's, die unsichtbar bleiben müssen, solange der Sensor 13 keinen anormalen Zustand ermittelt hat.

In einer anderen Variante wird das Entsperrsignal e im Latch 138 zurückgesetzt, nachdem die Zustandsgrösse c zum Beispiel wieder die Schwelle s unterschritten hat. Eine Verzögerung oder ein Hysteresissystem kann vorgesehen werden, um zu verhindern, dass das RFID zwischen dem gesperrten und dem entsperrten Zustand oszilliert. Diese Variante eignet sich beispielsweise für RFID's, die bei einem bestimmten Zustand zugänglich sein müssen.

In noch einer Variante kann ein Benutzer das Zurücksetzen des Entsperrsignals e selber initiieren, beispielsweise mit einem geeigneten Befehl über die drahtlose Schnittstelle 4. Das Entsperrsignal kann manuell oder automatisch entsperrt werden, beispielsweise nachdem eine entsprechende Aktion seitens des Benutzers, des Lesegeräts 3 oder eines Fernservers 5 ausgelöst wurde. Es ist auch möglich, das Entsperrsignal e erst dann zu schalten, wenn das Wissen eines vorbestimmten elektronischen Schlüssels bewiesen wurde.

In noch einer anderen Variante wird das Entsperrsignal e automatisch nach einer gewissen Dauer zurückgesetzt, wobei die Dauer von einem nicht dargestellten Zeitmodul in der Baueinheit 1 gemessen werden kann.

Im dargestellten Beispiel wird die Referenz, zum Beispiel die Schwelle s, digital in einem Speicher 134 abgelegt. Es wäre aber ebenfalls möglich, diese Referenz mit einem analogen Signal festzulegen (beispielsweise mit einem Referenzstrom aus einem Stromspiegel oder aus einer Referenzspannung, die mit dem Strom beziehungsweise mit der Spannung am Ausgang des Messwertaufnehmers 131 verglichen wird). Ebenfalls denkbar ist die Möglichkeit, die Referenz gleich im MEMS-Sensor 13 vorzusehen; in diesem Fall könnte das MEMS 131 beispielsweise einen binäres oder mehrwertiges Ausgangssignal liefern, das gleich zur Sperrung oder Entsperrung des RFID-Tags benutzt wird. Diese Varianten haben jedoch den Nachteil, dass die Referenz s meist nicht genau gesetzt werden kann, und dass sie nachträglich nur noch schwer geändert werden kann.

Ein Lesegerät 2, 3 kann somit Leseabfragen an Baueinheiten 1 im Nahbereich senden. Nur Baueinheiten, die entsperrt sind, beantworten diese Leseabfrage überhaupt, oder beantworten diese Abfrage mit dem gewünschten Inhalt. Die Übermittlung der Daten der Baueinheiten an das Lesegerät 2, 3 wird wesentlich beschleunigt, insbesondere wenn sich viele gesperrte, unsichtbare Baueinheiten im Lesebereich befinden. Ausserdem wird das Risiko von Kollisionen zwischen Antworten von mehreren Baueinheiten 1 wesentlich reduziert. Da gesperrte Baueinheiten Leseabfragen nicht beantworten, oder nur mit einer Teilantwort antworten, wird der Stromverbrauch von den Baueinheiten 1 und von den Lesegeräten 2 reduziert.

Das erfindungsgemässe System und die erfindungsgemässe Baueinheit eignen sich beispielsweise für die schnelle Identifizierung von defekten oder möglicherweise defekten Produkten. Für diese Anwendung muss das überwachte Produkt mit einem Sensor 13 versehen werden, der eine physikalische oder chemische Zustandsgrösse ermittelt, die eine Angabe über den Zustand des Sensors liefern. Für Lebensmittel oder Medikamente kann beispielsweise ein Temperatursensor, ein chemischer Sensor oder ein biologischer Sensor (der beispielsweise auf bestimmte Bazillen reagiert) vorgesehen werden, wobei vorzugsweise ein Integrator vorgesehen wird, um die Summe aller Angriffe, die das Produkt erlebt hat, zu errechnen. Für zerbrechliche Produkte (beispielsweise Haushaltswaren, elektronische Produkte, Festplatten) und für optische Träger wie zum Beispiel CD's und DVD's kann ein Beschleunigungssensor 13 vorgesehen werden, um zu prüfen, ob sich das Produkt schnell bewegt hat oder gedreht wurde und ob es noch als neu verkauft werden kann. In einer Ausführungsvariante ist das Beschleunigungssensor 13 auch ein Aufprallsensor, um zu prüfen, ob das Produkt sorgfältig behandelt wurde.

Wenn der Sensor einen Wert ermittelt hat, der auf ein defektes oder verbrauchtes Produkt hinweisen könnte, wird das RFID-Tag 11 lesbar. Dies erlaubt beispielsweise, eine ganze Palette mit einer grossen Anzahl von mit Baueinheiten 1 markierten Produkten sehr schnell zu scannen, um zu prüfen, ob und wie viele Produkte defekt sind.

Umgekehrt können RFID's auch verwendet werden, um einwandfreie Produkte zu markieren, die bestimmte mit dem Sensor 13 detektierbaren Herstellungs- und Testverfahren durchlaufen haben. Ein Strahlungssensor 13 kann beispielsweise angewendet werden, der ein RFID-Tag 11 erst dann entsperrt, wenn ein markiertes Lebensmittelprodukt oder medizinisches Produkt mit einem bestimmten Strahlungsverfahren sterilisiert wurde. Ist dies nicht der Fall, wird das Produkt beispielsweise an einem Portal oder an der Verkaufskasse wegen unlesbaren RFID-Daten gestoppt. Muss die Sterilisation oder das getestete Verfahren periodisch wiederholt werden, kann wie bereits erklärt das RFID-Tag 11 nach einer in einem integrierten Timer definierten Dauer automatisch wieder gesperrt werden.

Erfindungsgemässe Baueinheiten 1 können auch angewendet werden, um Produkte, Personen oder geographische Sektoren zu schützen und bei Anfragen einen Alarm auszulösen, wenn der Sensor 13 eine bestimmte Bedingung ermittelt hat. Die Alarmdaten im RFID-Tag 11 sind von einem externen autorisierten Lesegerät 2 lesbar, nachdem die vom Sensor 13 ermittelte Zustandsgrösse c die vorbestimmte Referenz s, beispielsweise eine vorbestimmte Schwelle s, überschritten hat. Diese Lösung eignet sich insbesondere für die periodische, wiederholte oder kontinuierliche Überwachung von Baueinheiten 1 mit einem Lesegerät 2,3. Es können beispielsweise mehrere Sensoren in einem Gebäude gesammelt werden, die je über RFID-Tags mit einem oder mehreren Lesegeräten 2 und eventuell mit einem Fernserver 5 verbunden werden, um einen Alarm auszulösen, sobald ein RFID aktiviert wird.

Der Sensor 13 in der Baueinheit 1 kann auch den Hauptzweck haben, dass Daten im RFID-Tag 11 oder gar das Vorhandensein eines RFID-Tags 11 gegenüber fremden Lesegeräten 2,3 vertraulich bleiben. RFID-Tags oder Daten im RFID-Tag bleiben somit vertraulich, solange eine automatisch vom Sensor erfasste Bedingung nicht erfüllt ist. Auch nachdem vom Sensor ausgelösten Freischalten der Daten kann der RFID-Inhalt gegenüber dem nicht autorisierten Lesegerät 3 vertraulich gehalten werden.

Es können beispielsweise RFID-Tags 11 mit einem Temperatur-sensor 13 versehen werden, die erst zugänglich sind, wenn oder nachdem sie am Körper getragen wurden. Andere RFID-Tags 11 mit einem Lichtsensor 13 sind nur beim Tageslicht oder umgekehrt nur in der Dunkelheit lesbar. Möglich ist auch, dass bei Tageslicht ein anderer Datensatz als in der Dunkelheit lesbar wird.

Der Vorteil einer Kombination eines RFID-Tags 11 mit einem MEMS-Sensor 13 auf einem Chip oder zumindest in einer tragbaren Baueinheit 1 liegt in der Reduzierung des Volumen und des Preises. Es können somit Produkte und Personen einfach und mit wenig Aufwand markiert werden. Ausserdem kann die Baueinheit 1 vom Stromnetz unabhängig sein und von einer eigenen Stromquelle, beispielsweise einer Batterie oder einer Solarzelle, oder vorzugsweise vom Lesegerät 2, 3, gespeist werden. Möglich ist eine Stromversorgung des RFID-Teils 11 und/oder des Sensors 13 mit dem externen Lesegerät 2, 3.

Es können im Rahmen der Erfindung auch mehrere Messsensoren 13 in einer einzigen Baueinheit 1 verwendet werden.

Die in der obigen Beschreibung erwähnte drahtlose Schnittstellen 4, 11 können auch als kontaktlose Schnittstellen verstanden werden.

## Patentansprüche

1. Elektronische Baueinheit (1) mit folgenden Komponenten:
ein Messsensor (13), der eine physikalische oder chemische Zustandsgrösse in eine elektrische Zustandsgrösse (c) umwandelt,
eine drahtlose Schnittstelle (4), über welche Daten an ein externes Lesegerät (2, 3) im Nahbereich zugänglich gemacht werden,
der Zugriff auf mindestens gewisse benannten Daten über die benannte drahtlose Schnittstelle (4) erst dann entsperrt wird, wenn die benannte elektrische Zustandsgrösse (c) in einem bestimmten Verhältnis zu einer vorbestimmten Referenz (s) steht,
**dadurch gekennzeichnet, dass**
der benannte Messsensor (13) eine Signalaufbereitungselektronik (132, 133) umfasst, um eine Ableitung und/oder eine Integration der elektrischen Zustandsgrösse (c) vor dem Vergleich mit der benannten Referenz (s) durchzuführen.

2. Die Baueinheit (1) gemäss Anspruch 1, **dadurch gekennzeichnet, dass** der Zugriff auf mindestens gewisse benannten Daten erst dann entsperrt wird, wenn die benannte elektrische Zustandsgrösse (c) die benannte vorbestimmte Referenz (s) überschreitet.

3. Die Baueinheit (1) gemäss einem der Ansprüche 1 oder 2, **dadurch gekennzeichnet, dass** der benannte Messsensor (13) ein MEMS oder ein Messsensor in Nanotechnologie ausgeführt ist.

4. Die Baueinheit (1) gemäss einem der Ansprüche 1 bis 3, **dadurch gekennzeichnet, dass** die benannte Schnittstelle ein RFID-Tag (11) ist.

5. Die Baueinheit (1) gemäss einem der Ansprüche 1 bis 4, **dadurch gekennzeichnet, dass** die benannte drahtlose Schnittstelle (4) als Sklave funktioniert und Daten auf Initiative des benannten externen Lesegeräts (2, 3) senden kann.

6. Die Baueinheit (1) gemäss eines der Ansprüche 1 bis 5, **dadurch gekennzeichnet, dass** die Baueinheit (1) vom Stromnetz unabhängig ist.

7. Die Baueinheit (1) gemäss einem der Ansprüche 1 bis 6, **dadurch gekennzeichnet, dass** die benannte drahtlose Schnittstelle (4) und/oder der Messsensor (13) vom benannten externen Lesegerät (2, 3) elektrisch gespeist werden.

8. Die Baueinheit (1) gemäss einem der Ansprüche 1 bis 7, **dadurch gekennzeichnet, dass** die benannte Referenz (s) in einem Speicher (134) abgelegt ist.

9. Die Baueinheit (1) gemäss einem der Ansprüche 1 bis 8, **dadurch gekennzeichnet, dass** die benannte Referenz (s) über die drahtlose Schnittstelle (4) nachträglich anpassbar ist.

10. Die Baueinheit (1) gemäss einem der Ansprüche 1 bis 9, **dadurch gekennzeichnet, dass** der benannte Messsensor (13) mindestens eine der folgenden Zustandsgrössen in eine elektrische Zustandsgrösse (c) umwandelt:
- Temperatur,
- Druck,
- Beschleunigung,
- Geschwindigkeit,
- Elektromagnetische Strahlung,
- Licht,
- UV-Licht,
- Akustische Grösse,
- Chemische Parameter,
- Atomare Strahlung,
- Biologische Parameter,
- Farbe,
- Gas,
- Duft.

11. Die Baueinheit (1) gemäss einem der Ansprüche 1 bis 10, **dadurch gekenntzeichnet, dass** der Zugriff auf die gesamten Daten gesperrt ist, solange die benannte elektrische Zustandsgrösse (c) die benannte vorbestimmte Referenz (s) nicht überschreitet.

12. Die Baueinheit (1) gemäss einem der Ansprüche 1 bis 11, **dadurch gekenntzeichnet, dass** Baueinheit (1) die Leseanfragen von benannten externen Lesegeräten (2, 3) nicht beantwortet, solange die benannte elektrische Zustandsgrösse (c) die benannte vorbestimmte Referenz (s) nicht überschreitet.

13. Die Baueinheit (1) gemäss einem der Ansprüche 1 bis 12, **dadurch gekennzeichnet, dass** der Zugriff auf mindestens gewisse benannten Daten über die benannte drahtlose Schnittstelle (4) unwiderrufbar entsperrt wird, sobald die benannte elektrische Zustandsgrösse (c) eine vorbestimmte Referenz (s) überschritten hat.

14. System mit folgenden Komponenten :
mindestens eine Baueinheit (1) gemäss einem der Ansprüche 1 bis 13,
mindestens ein Lesegerät (2, 3), um die benannten Daten über eine drahtlose Schnittstelle (4) im Nahbereich zu lesen,
mindestens ein Fernserver (5) mit einer Datenbank (52, 53), in welcher Baueinheits- oder benutzerspezifische Daten abgelegt werden,
wobei der benannte Fernserver (5) über ein Ferntelekommunikationsnetz (100) mit dem benannten Lesegerät (2, 3) verbunden ist.

15. System gemäss Anspruch 14, **dadurch gekennzeichnet, dass** das Lesegerät (2, 3) ein Mobilfunkgerät ist, welches mit einem Identifizierungsmodul (24, 34) ausgestattet ist und zur Identifizierung des Mobilfunkgerät gegenüber einem Mobilfunknetz (100) dient und das Mobilfunkgerät über das Mobilfunknetz (100) mit dem Fernserver (5) verbunden ist.

16. Verfahren zur drahtlosen Übertragung von Daten aus einer elektronischen Baueinheit (1) gemäss einem der Ansprüche 1 bis 13, mit folgenden Verfahrenschritten:
Ein Messsensor (13) in der benannten Baueinheit (1) wandelt eine physikalische oder chemische Zustandsgrösse In eine elektrische Zustandsgrösse (c) um,
der Zugriff auf mindestens gewisse benannten Daten wird entsperrt, sobald die elektrische Zustandsgrösse (c) eine vorbestimmte Referenz (s) überschreitet,
ein externes Lesegerät (2, 3) sendet eine Leseabfrage über die benannte drahtlose Schnittstelle (4) an die benannte Baueinheit (1),
die benannte Baueinheit (1) beantwortet die benannte Leseabfrage mit den gewünschten Daten,
**dadurch gekennzeichnet, dass**
der benannte Messsensor (13) eine Signalaufbereitungselektronik (132, 133) umfasst und eine Ableitung und/oder eine Integration der elektrischen Zustandsgrösse (c) vordem Vergleich mit der benannten Referenz (s) durchführt.

17. Das Verfahren des Anspruchs 15, **dadurch gekennzeichnet, dass** die Autorisierung des externen Lesegeräts (2, 3) geprüft wird, bevor die Baueinheit (1) Daten zur Verfügung stellt.

18. Das Verfahren des Anspruchs 15, **dadurch gekennzeichnet, dass** die benannte Referenz (s) über die drahtlose Schnittstelle (4) nachträglich angepasst wird.

## Claims

1. Electronical unit (1) with the following components :
a measuring sensor (13) which transforms a physical or chemical state variable in an electrical state variable (c),
a wireless near field interface (4) over which data to an external reading device (2, 3) is made available,
the access on at least some of said data over said wireless interface (4) is unlocked only when said electrical variable (c) is in a certain ratio to a predefined reference (s),
**characterised in that**
said mess sensor (13) comprises a signal processing electronic (132, 133) to process a derivative and/or an integration of the electrical state variable (c) before the comparison with said reference (s).

2. The unit (1) according to claim 1, **characterised in that** access on at least some of said data is unlocked only, when said electrical state variable (c) exceeds said predefined reference (s).

3. The unit (1) according to any of the claims 1 to 2, **characterised in that** said mess sensor (13) is a MEMS or a sensor made from nanotechnology.

4. The unit (1) according to any of the claims 1 to 3, **characterised in that** said interface is a RFID tag (11).

5. The unit (1) according to any of the claims 1 to 4, **characterised in that** said wireless interface (4) works as a slave and can send data on the initiative of the external reading device (2, 3).

6. The unit (1) according to any of the claims 1 to 5, **characterised in that** the unit (1) is independent from the power grid.

7. The unit (1) according to any of the claims 1 to 6, **characterised in that** said wireless interface (4) and/or the sensor (13) are supplied from said external reading device (2, 3).

8. The unit (1) according to any of the claims 1 to 7, **characterised in that** said reference (s) is stored in a storage (134).

9. The unit according to any of the claims 1 to 8, **characterised in that** said reference (s) is adaptable over said wireless interface (4) afterwards.

10. The unit according to any of the claims 1 to 9, **characterised in that** said sensor (13) at least one of the following state variables in an electrical state variable (c) changes:
- temperature,
- pressure,
- acceleration,
- velocity,
- electromagnetic radiation,
- light,
- UV light,
- acoustic values,
- chemical parameters,
- atomic radiation,
- biological parameters,
- colour,
- gas,
- scent.

11. The unit (1) according to any of the claims 1 to 10, **characterised in that** the access on the entire data is locked as long as said electrical state variable (c) does not exceed said predefined reference (s).

12. The unit (1) according to any of the claims 1 to 11, **characterised in that** the unit (1) does not answers reading requests of said external reading device (2, 3) as long as said electrical state variable (c) does not exceed said predefined reference (s).

13. The unit (1) according to any of the claims 1 to 12, **characterised in that** the access on at least some of said data over said wireless interface (4) is irrevocably unlocked as soon as said electrical state variable (c) exceeds said predefined reference (s).

14. System with the following components:
at least a unit (1) according to one of the claims 1 to 13,
at least a reading device (2, 3) to read said data over a wireless near field interface (4),
at least a remote server (5) with a database (52, 53) in which an unit specific or user specific data is stored,
whereby said remote server (5) is connected over a remote telecommunication network (100) with said reading device (2, 3).

15. System according to claim 14, **characterized in that** the reading device (2, 3) is a mobile radio communication device, which is equipped with a identification module (24, 34) and aims for identification of the mobile radio device vis-à-vis the mobile radio network (100) and the mobile radio device is connected over the mobile radio network (100) with the remote server (5).

16. A method for wireless transmission of data from a electronic unit (1) according to one of the claims 1 to 13 with the following steps of the method:
a sensor (13) in said unit (1) changes a physical or chemical state variable in an electrical state variable (c),
the access on at least some of said data is released, as soon as the electrical state variable (c) exceeds a predefined reference (s),
an external reading device (2, 3) sends a reading request over said wireless interface (4) to said unit (1),
said unit (1) answers said reading request with the desired data,
**characterized in that**
said sensor (13) comprises a signal processing electronic (132, 133) and a derivative and/or an integration of the electrical state variable (c) is made before the comparison with said reference (s).

17. The method according to claim 15, **characterized in that** the authorisation of the external reading device (2, 3) is checked before the unit (1) makes data available.

18. The method according to claim 15, **characterized in that** said reference (s) is adapted over the wireless interface (4) afterwards.

## Revendications

1. Module électronique (1) avec les composants suivants :
un capteur de mesure (13) qui transforme une variable d'état physique ou chimique en variable d'état électrique (c),
une interface de transmission sans fil (4) par laquelle les données sont rendues accessibles dans un périmètre de proximité à un lecteur externe (2, 3),
l'accès à au moins certaines de ces données au travers de ladite interface sans fil (4) est débloqué seulement si ladite variable d'état électrique (c) est dans une proportion certaine avec une référence prédéterminée (s),
**caractérisé en ce que**
ledit capteur de mesure (13) comporte une électronique de traitement des signaux (132, 133) pour effectuer une dérivation et/ou une intégration de la variable d'état électrique (c) avant la comparaison avec ladite référence (s).

2. Le module (1) selon la revendication 1, **caractérisé en ce que** l'accès à au moins certaines des données est débloqué seulement si ladite variable d'état électrique (c) dépasse ladite référence prédéterminée (s).

3. Le module (1) selon l'une des revendications 1 ou 2, **caractérisé en ce que** ledit capteur de mesure (13) est un MEMS ou un capteur en nanotechnologie.

4. Le module (1) selon l'une des revendications 1 à 3, **caractérisé en ce que** ladite interface est une puce RFID (11).

5. Le module (1) selon l'une des revendications 1 à 4, **caractérisé en ce que** ladite interface sans fil (4) fonctionne comme esclave et peut envoyer des données sur l'initiative dudit lecteur externe (2,3).

6. Le module (1) selon l'une des revendications 1 à 5, **caractérisé en ce que** le module (1) est indépendant du réseau électrique.

7. Le module (1) selon l'une des revendications 1 à 6, **caractérisé en ce que** ladite interface sans (4) et/ou le capteur de mesure (13) sont alimentés en courant par ledit lecteur externe (2, 3).

8. Le module (1) selon l'une des revendications 1 à 7, **caractérisé en ce que** ladite référence (s) est sauvegardée dans une mémoire (134).

9. Le module (1) selon l'une des revendications 1 à 8, **caractérisé en ce que** ladite référence (s) est adaptable ultérieurement au travers de ladite interface sans fil (4).

10. Le module (1) selon l'une des revendications 1 à 9, **caractérisé en ce que** ledit capteur de mesure (13) convertit au moins l'une des variables d'état suivantes en une variable d'état électrique (c) :
- température,
- pression,
- accélération,
- vitesse,
- radiation électromagnétique,
- lumière,
- lumière-UV,
- valeurs acoustiques,
- paramètres chimiques,
- radiation atomique,
- paramètres biologiques,
- couleur,
- gaz,
- odeur.

11. Le module (1) selon l'une des revendications 1 à 10, **caractérisé en ce que** l'accès à toutes les données est bloqué tant que ladite variable d'état électrique (c) ne dépasse pas ladite référence prédéterminée (s).

12. Le module (1) selon l'une des revendications 1 à 11, **caractérisé en ce que** le module (1) ne répond pas aux requêtes de lecture dudit lecteur externe (2, 3) tant que ladite variable d'état électrique (c) ne dépasse pas ladite référence prédéterminée (s).

13. Le module (1) selon l'une des revendications 1 à 12, **caractérisé en ce que** l'accès à au moins certaines des données au travers de ladite interface sans fil (4) est débloqué irrévocablement dès que ladite variable d'état électrique (c) dépasse ladite référence prédéterminée (s).

14. Système comprenant les composants suivants :
au moins un module (1) selon l'une des revendications 1 à 13,
au moins un lecteur (2, 3) pour lire lesdites données au travers de ladite interface sans fil (4) dans un périmètre proche,
au moins un serveur d'accès distant (5) avec une banque de données (52, 53), dans laquelle des données relatives au module ou à l'utilisateur sont sauvegardées,
selon lequel ledit serveur d'accès distant (5) est connecté audit lecteur (2, 3) au travers d'un réseau de télécommunication à distance (100).

15. Système selon la revendication 14, **caractérisé en ce que** ledit lecteur (2, 3) est un appareil de radiocommunication mobile, qui est équipé d'un module d'identification (24, 34) et sert à l'identification dudit appareil de radiocommunication mobile vis-à-vis du réseau de télécommunication mobile (100), et **en ce que** l'appareil de radiocommunication mobile est connecté au serveur d'accès distant (5) au travers du réseau de télécommunication mobile (100).

16. Méthode pour la transmission sans fil de données d'un module électronique (1) selon l'une des revendications 1 à 13 comprenant les étapes suivantes:
un capteur de mesure (13) dans ledit module (1) transforme une variable d'état physique ou chimique en une variable d'état électrique (c),
l'accès à au moins certaines desdites données est débloqué dès que la variable d'état électrique (c) dépasse une référence prédéterminée (s),
un lecteur externe (2, 3) envoie une requête de lecture audit module (1) au travers de ladite interface sans fil (4), ledit module (1) répond à ladite requête de lecture avec les données requises,
**caractérisée en ce que**
ledit capteur de mesure (13) comprend un processeur électronique de signal (132, 133) et une dérivation et/ou une intégration de la variable d'état électrique (c) est effectuée avant la comparaison avec ladite référence (s).

17. La méthode selon la revendication 15, **caractérisée en ce que** l'habilitation du lecteur externe (2, 3) est vérifiée avant que le module (1) délivre des données.

18. La méthode selon la revendication 15, **caractérisée en ce que** ladite référence (s) est adaptée ultérieurement au travers de ladite interface sans fil (4).
